# EUROPEAN PATENT APPLICATION

(11) **EP 1 128 514 A1**
(43) Date of publication of application: **29.08.2001**
(21) Application number: 00200627.8
(22) Date of filing: 23.02.2000
(51) Int. Cl.: H02G 15/184, H02G 15/103, H02G 1/14

(54) **An insulating cable connection**

(71) Applicant: NKT Power Cables A/S, 2605 Bröndby (DK)
(72) Inventor: Hansen, Bo Svarrer, 2960 Rungsted Kyst (DK); Nielsen, Ole Kjaer, 3100 Hornbaek (DK)
(74) Representative: Elmeros, Claus

(57) **Abstract**

The invention consists of an insulating cable connection for joining an insulated electric power cable with a cable means, said electric cable comprising a wire conductor with a polymer based insulation system around said wire conductor, wherein the cable connection comprises a connection insulation system covering a wire conductor joint portion, wherein the connection insulation system is produced in the same polymer material selection as the insulation system of the first electric cable. By an insulating cable connection according to the invention, a more homogeneous electrical field in the longitudinal direction of the cable is obtained. Thus, a cable connection according to the invention results in an electrically stronger cable connection and a more robust insulating cable connection for high-voltage cables.

## Description

The present invention relates to an insulating cable connection for joining an insulated electric power cable to second cable means, said electric cable comprising a wire conductor with a polymer based insulation system around said wire conductor, where the cable connection comprises a connection insulation system covering a wire conductor joint portion.

A high-voltage cable comprises an electrically conducting wire core that carries the load currents. Around the conducting core an insulation system is provided. This insulation system comprises an inner semi-conducting shield in order to ensure as even a distribution of the electric field as possible in the insulation. Outside the inner semi-conducting shield an insulation is provided. On the outside of the insulation, a second outer semi-conducting shield is provided for providing an even distribution of the electric field and for retaining space charges that accumulate in the insulation.

Cross-linked polyethylene (XLPE) compositions are often used for the insulation system in power cables, since these materials allow for an increase in the electrical strength, a high operating temperature, improvement in handling and a good resistance to wear and tear. In WO 99/44207, a DC cable is described with a reduced tendency for space charge accumulation in the transitions between the layers in the cable, in particular around the semi-conducting shields. The advantage of reducing the space charges is that the DC voltage stress on the cable is reduced and thus allows for an increase in operation voltage or a reduction in the dimensions of the insulation thickness. Other examples of electrically insulating polymer compositions are also described in EP-A-0 674 325.

When the high-voltage cable is joined with another cable or with a termination or other cable accessories, the wire conductor is stripped from its insulation at the cable end section and joined with another conductor by welding, soldering or compression, depending on the type of electric conductor. The insulation is then re-established around the conductor. Methods of producing such insulating cable connections are known from e.g. US-A-4,828,634 or EP-A-0088450. Other methods for connecting cables are known from Danish patent Nos. 139859 and 140037.

In the cable connection space charges will also occur. Such charges will accumulate between the cable insulation system and the connection insulation system causing a decrease in the electrical strength of the cable connection that results in a decrease in the operation voltage allowed in the cables that have been joined.

In this light, it is the object of the invention to provide an insulation cable connection that reduces the tendency for space accumulation in the connection portion.

This object is achieved by an insulating cable connection of the initially mentioned kind wherein the connection insulation system is produced in the same polymer material selection as the insulation system of the electric cable.

By using the same polymer materials for the insulation system in the insulating cable connection as is used in the cable itself, the space charge accumulations will be reduced since it is ensured that the electrical properties of the polymer material will always be the same. By an insulating cable connection according to the invention, a more homogeneous electrical field in the longitudinal direction of the cable is obtained. The tendency of developing polarised a space charge profile in the longitudinal direction of the cable is thus reduced in the polymer based insulation systems of the cable and the connection portions. Thus, a cable connection according to the invention results in an electrically stronger cable connection and a more robust insulating cable connection for high-voltage cables.

A connection insulation system of the cable connection according to the invention is designed in correspondence with the power cable to be joined and comprises an inner semi-conducting shield around the outside of the wire conductor and the inside of a conductor insulation and an outer semi-conducting shield outside the conductor insulation.

In the preferred embodiment, the connection insulation system is at least partly produced by moulding wherein the conductor insulation of the connection insulation system is extruded. The inner and/or the outer semi-conducting shield could also be produced by extrusion or other types of moulding. By extruding the polymer insulation, a homogeneous insulation is ensured and, in turn, a good performance and stability of the cable insulation system is provided. Extruding the components of the connection insulation system can be carried out simultaneously or by extruding and/or otherwise moulding the individual layers separately.

In an alternative solution, the connection insulation system is at least partly produced by at least one tape strip wound around the wire conductor connection. The inner and/or the outer semi-conducting shield is made up by said tape strip(s). The conductor insulation of the connection insulation system could be made up by one or more tape strips wound around the wire conductor connection. The use of premanufactured tape strips could be preferable under some circumstances, such as if the location on which the connection is to be carried out is remote or inaccessible for extrusion moulding equipment.

In the preferred embodiment of the invention, the connection insulation system is made of cross-linked polyethylene, XLPE, based composition, and particularly advantageously the XLPE based composition would comprise a polar modification in the form of a polar segment comprising a polar co-monomer. The use of a polymer of this selection can ensure a particularly low space charge accumulation not only in the cable connection but in the cable assembly as a whole.

The electric power cable to which the insulating cable connection according to the invention is used would preferably be a DC power cable, but could alternatively be a AC power cable.

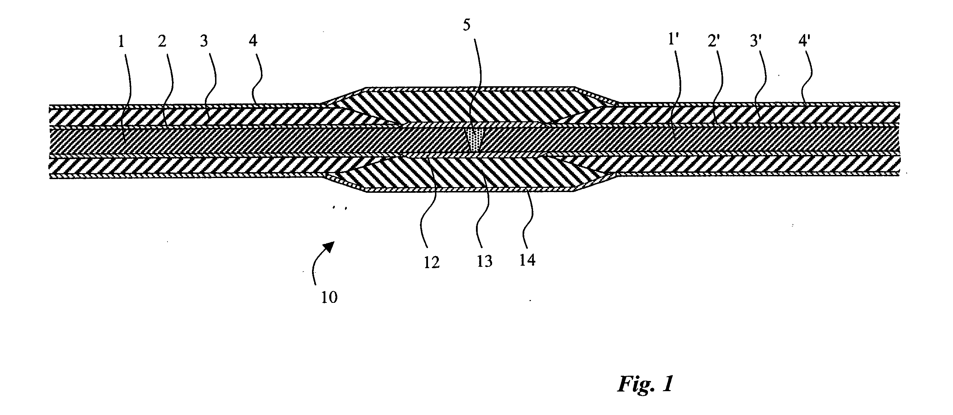

The invention is described in detail with reference to the accompanying drawing in which a schematic cross-sectional view of an insulating cable connection is shown.

The figure shows an insulating cable connection joining a first cable with a second cable. However, an insulating cable connection according to the invention can also be used for establishment of a stress grading cone, such as a cable accessory, e.g. a cable termination.

The electric conductors 1, 1' are surrounded by respective insulation systems comprising the inner semi-conducting shields 2, 2', the insulation layers 3, 3' and the outer semi-conducting shields 4, 4'. The end portions of the insulation layers have been removed prior to connecting the ends of the conductors 1, 1' together by welding and the insulating cable connection 10 is provided in order to re-establish the cable insulation around the wire conductors 1, 1'.

First, the inner semi-conducting shield 12 in the insulating connection is established, preferably by placing a moulding tool comprising two form parts around the conductors 1, 1' and extruding polymer material into the form. A similar process is used for re-establishing the other layers, i.e. the connecting insulation 13 and the outer semi-conducting shield 14.

The polymer material used in the insulating cable connection corresponds to the material used in the cable insulation. This material can be chosen from variety of electrically insulating polymer materials suitable for extrusion. In the preferred embodiment of the invention, an XLPE composition is used. This material is very suitable for an extruded cross-linked cable insulation system due to its material characteristics and it can be used to mould an insulating cable connection on site for joining cables together. In order to minimise the accumulation of space charges in the insulation system, an XLPE material having a low amount of a polar co-monomer implemented into the polyethylene chain is used.

In the figure, the connection is illustrated by a larger diameter than the cable itself. However, it is realised that for DC cables it is preferable that the diameter of the insulating cable connection is substantially the same as that of the cable due to the longitudinal gradients in the polarised space charge profile.

However, it is realised that other materials can be used without deriving from the scope of the invention some of which are described in the accompanying claims. The cable assembly is also provided with a metallic lead sheath and an outer covering arranged around the outside of the lead sheath (not shown). These layers are naturally also re-established.

## Claims

1. An insulating cable connection for connecting an insulated electric power cable with second cable means, said electric cable comprising a wire conductor with a polymer based insulation system around said wire conductor, where the cable connection comprises a connection insulation system covering a wire conductor joint portion,
**characterised in that**
the connection insulation system is produced in the same polymer material selection as the insulation system of the electric cable.

2. An insulating cable connection according to claim 1, wherein the connection insulation system comprises an inner semi-conducting shield around the outside of the wire conductor and the inside of a conductor insulation and an outer semi-conducting shield outside the conductor insulation.

3. An insulating cable connection according to claim 1 or 2, wherein the connection insulation system is at least partly produced by moulding.

4. An insulating cable connection according to claim 3, wherein the conductor insulation of the connection insulation system is extruded.

5. An insulating cable connection according to claim 3, wherein the inner and/or the outer semi-conducting shield is produced by extrusion or other types of moulding.

6. An insulating cable connection according to claim 1 or 2, wherein the connection insulation system is at least partly produced by at least one tape strip wound around the wire conductor connection.

7. An insulating cable connection according to claim 6, wherein the inner and/or the outer semi-conducting shield is made up by said tape strip(s).

8. An insulating cable connection according to claim 6 or 7, wherein the conductor insulation of the connection insulation system is made up by one or more tape strips wound around the wire conductor connection.

9. An insulating cable connection according to any of the previous claims, wherein the connection insulation system is made of cross-linked polyethylene, XLPE, based composition.

10. An insulating cable connection according to claim 9, wherein the XLPE based composition comprises a polar modification in the form of a polar segment comprising a polar co-monomer.

11. An insulating cable connection according to any of the previous claims, wherein the diameter of the insulating cable connection is essentially similar to the diameter of the electric cable.

12. An insulating cable connection according to any of the previous claims, wherein the electric power cable is a DC power cable.

13. An insulating cable connection according to any of claims 1 to 11, wherein the electric power cable is a AC power cable.

14. An insulating cable connection according to any of the previous claims, wherein the second cable means is a cable termination.

15. An insulating cable connection according to any of claims 1 to 13, wherein the second cable means is a second electric cable.
